## Europäisches Patentamt
## European Patent Office
## Office européen des brevets

(19)

(11) Numéro de publication: **0 003 290**
**B1**

(12)
# FASCICULE DE BREVET EUROPEEN

(45) Date de publication du fascicule du brevet: **12.05.82**

(51) Int. Cl.³: **F 16 F 9/50,** F 16 F 9/06
//B60G15/12

(21) Numéro de dépôt: **79100073.0**

(22) Date de dépôt: **11.01.79**

(54) **Amortisseur hydraulique de suspension de véhicule.**

(30) Priorité: **25.01.78 FR 7802054**

(43) Date de publication de la demande:
**08.08.79 Bulletin 79/16**

(45) Mention de la délivrance du brevet:
**12.05.82 Bulletin 82/19**

(84) Etats contractants désignés:
**DE FR GB IT**

(56) Documents cités:
**DE - A - 1 405 886**
**DE - A - 1 505 608**
**DE - A - 2 540 720**
**DE - B - 1 147 806**
**FR - A - 932 352**
**FR - A - 1 165 327**
**FR - A - 1 547 923**
**FR - A - 2 121 952**
**FR - A - 2 278 996**
**FR - A - 2 287 627**
**GB - A - 682 110**

(73) Titulaire: **Sirven, Jacques**
**34, rue de l'Orangerie**
**F-78000 Versailles (FR)**

(72) Inventeur: **Sirven, Jacques**
**34, rue de l'Orangerie**
**F-78000 Versailles (FR)**

(74) Mandataire: **Casalonga, Alain et al,**
**BUREAU D.A. CASALONGA OFFICE JOSSE &**
**PETIT Baaderstrasse 12-14**
**D-8000 München 5 (DE)**

(56) Documents cités:
**US - A - 2 308 404**
**US - A - 2 856 035**

Courier Press, Leamington Spa, England.

## Amortisseur hydraulique de suspension de véhicule

La présente invention est relative à un dispositif d'amortissement destiné à être interposé entre une partie suspendue qui peut être par exemple constituée par le châssis ou la caisse d'un véhicule et une partie non suspendue qui peut par exemple être constituée par les roues d'un véhicule.

Le choix de la valeur de la force d'amortissement dans un amortisseur hydraulique est toujours le fruit d'un compromis difficile à trouver. Il est en effet nécessaire de limiter la force d'amortissement lors d'un mouvement de compression de l'amortisseur de façon qu'un choc brutal tel que le passage d'une roue du véhicule sur une irrégularité du sol ne provoque pas une accélération trop importante de l'ensemble de la masse suspendue.

Il a été déjà été proposé (FR — A 2,121.952) de donner à un dispositif d'amortissement une structure particulière de façon à amortir au maximum les oscillations de la masse suspendue lors du mouvement de compression tout en limitant la force d'amortissement lorsque la vitesse du mouvement de compression est importante, c'est-à-dire par exemple lorsque la roue du véhicule rencontre un obstacle de faible dimension mais provoquant un choc brutal sur l'amortisseur. Grâce à un tel dispositif d'amortissement il a été possible d'obtenir une force d'amortissement qui décroît lorsque la vitesse du mouvement de compression dépasse une valeur limite prédéterminée.

L'amortisseur hydraulique décrit dans ce brevet français comporte à cet effet une valve de commande montée de manière fixe dans le cylindre et pilotée par la pression d'un fluide hydraulique de façon a mettre en communication lorsqu'elle s'ouvre, les deux chambres qui se trouvent délimitées dans le cylindre de l'amortisseur par le piston principal actionné par sa tige. La pression de pilotage de la valve de commande est obtenue en freinant l'écoulement vers un réservoir de fluide hydraulique de l'excédent de fluide dû à la diminution de volume utile du cylindre à la suite de la pénétration de la tige du piston dans l'une des chambres du cylindre de l'amortisseur.

Lorsque la vitesse de la tige du piston, lors d'un mouvement de compression rapide, dépasse une valeur limite, la pression différentielle agissant sur les deux faces de la valve de commande s'accroît et provoque, au-delà d'une valeur limite prédéterminée, l'ouverture de ladite valve de commande ce qui entraîne une diminution rapide de la force d'amortissement. La pression hydraulique s'exerçant sur la valve de commande étant fonction de la vitesse de déplacement du piston lors d'un mouvement de compression on obtient finalement une force d'amortissement qui décroît en fonction de la vitesse de déplacement du piston de l'amortisseur.

Dans un mode de réalisation également décrit dans ce brevet français l'amortisseur peut être monté par l'intermédiaire d'une pièce élastique. Grâce à ce perfectionnement, lorsque l'accroissement par unité de temps de la vitesse de déplacement de la tige est très important, la pièce élastique est tout d'abord comprimée ce qui provoque un accroissement du volume des pièces immergées dans le cylindre entraînant ainsi le pilotage de la valve de commande comme précédemment avant que la force d'amortissement n'atteigne sa valeur maximale.

Une variante de réalisation particuliérement intéressante d'un dispositif d'amortissement metant en oeuvre les enseignements de ce brevet français a également fait l'objet d'une publication (FR — A 2,287.627). Dans ce mode de réalisation, la valve de commande qui est toujours montée de manière fixe dans le cylindre et dont l'ouverture entraîne la diminution rapide de la force d'amortissement, est soumise à l'action d'une pression de référence sensiblement constante. C'est ainsi que l'une des faces de la valve de commande peut constituer une portion de surface délimitant une chambre de référence remplie d'un gaz. Cette chambre de référence peut être fermée et isolée ou encore ouverte à l'atmosphère auquel cas la pression de référence reste exactement constante ou encore reliée à la partie du réservoir de fluide hydraulique qui est remplie de gaz de façon à réaliser un équilibre de pression permettant de s'affranchir des variations de fonctionnement dues aux dilatåtions thermiques.

Dans tous les cas le pilotage de la valve de commande est obtenu en réponse à l'augmentation de la pression du fluide hydraulique dans un espace intermédiaire disposé entre la première chambre du cylindre de l'amortisseur et la deuxième chambre contenant la tige du piston.

La présente invention a pour objet un perfectionnement aux dispositifs d'amortissement à fluide hydraulique du type précité dans lesquels il est possible d'obtenir une diminution de la force d'amortissement à partir d'une limite prédéterminée de la vitesse de compression de la tige. Selon la présente invention, la valve de commande n'est plus montée de manière fixe dans le cylindre mais se trouve au contraire solidaire du piston le pilotage de la valve de commande est effectué directement par la pression régnant dans la première chambre du cylindre de l'amortisseur sans qu'il y ait lieu de prévoir l'existence d'un espace intermédiaire. Il est donc possible de simplifier considérablement la structure du dispositif amortisseur qui peut en outre être construit à partir d'un tube unique, le réservoir de fluide hydraulique étant placé à l'une des extrémités de ce tube.

Le dispositif d'amortissement selon la présente invention comprend un cylindre contenant un fluide hydraulique, un piston actionné par une tige définissant dans le cylindre une première chambre et une deuxième chambre, ladite deuxième chambre contenant la tige. Le dispositif comprend également un réservoir de fluide pouvant communiquer avec la première chambre par l'intermédiaire d'une restriction. Selon l'invention le dispositif comprend en outre une valve de commande disposée dans un passage reliant la première et la deuxième chambre et soumise à la fois à l'action d'un ressort et à l'action de la pression sensiblement constante d'un gaz de référence contenu dans une chambre de référence et tendant à fermer ladite valve de commande. De cette manière la pression différentielle entre la première chambre et le gaz de référence provoque l'ouverture de la valve de commande lors d'une compression rapide du fluide hydraulique contenu dans la première chambre. Selon l'invention la valve de commande est soumise à l'action du fluide hydraulique contenu dans la deuxième chambre et tendant à la fermer. Par ailleurs la valve présente une première surface d'aire S au contact du fluide hydraulique de la première chambre et une deuxième surface opposée à la première dont seulement une portion d'aire $s$ inférieure ou égale à l'aire S est soumise à la pression du gaz de référence. La deuxième surface constitue une paroi mobile de la chambre de référence.

Dans ces conditions, la valve de commande est soumise d'une part à la force du ressort de rappel tendant à la fermer, et d'autre part à deux forces antagonistes tendant à ouvrir ladite valve, à savoir, une force résultant de la pression différentielle entre la première et la deuxième chambre du cylindre et une force résultant de la pression différentielle entre la première chambre et le gaz de référence. L'équilibre de ces différentes forces est tel que la valve de commande reste fermée tant que la différence de pression entre la première et la deuxième chambre du cylindre ne dépassent pas une valeur limite qui est fonction de la vitesse de compression de la tige du piston. Dès que cette valeur limite est dépassée, la valve de commande s'ouvre entraînant une diminution de la force d'amortissement.

Dans un mode de réalisation avantageux la chambre de référence contenant le gaz de référence précité peut être mise en communication soit avec l'atmosphère extérieure, soit avec la partie du réservoir qui comprend un gaz. Dans ce mode de realisation il est préféré de prévoir un preçage axial dans la tige du piston, preçage qui communique avec la chambre de référence précitée.

Grâce à la structure particulière des moyens de commande de la valve du dispositif de l'invention, il est possible de disposer le réservoir de fluide hydraulique dans la partie supérieure d'un tube définissant le cylindre, partie qui se trouve à l'opposé de la tige du piston. Bien entendu, il est également possible de concevoir une disposition différente dans laquelle le réservoir de fluide hydraulique est au contraire disposé dans un espace annulaire défini entre le cylindre proprement dit et une enveloppe extérieure concentrique audit cylindre.

Dans un mode de réalisation avantageux le dispositif amortisseur de l'invention comporte un bloc élastique par exemple en élastomère, disposé à l'intérieure du cylindre de façon à pouvoir faire varier la pression dans la première chambre lors d'un mouvement de compression rapide.

La présente invention sera mieux comprise à l'étude de quelques modes de réalisation particuliers décrits à titre nullement limitatifs et illustrés par les dessins annexés, sur lesquels:

la fig. 1 représente une vue en coupe schématique d'un premier mode de réalisation d'un dispositif amortisseur selon la présente invention;

la fig. 2 est une vue partielle en coupe montrant le piston dans une variante de réalisation d'un dispositif amortisseur analogue à celui qui est représenté à la fig. 1;

la fig. 3 est une vue en coupe d'un autre mode de réalisation selon la présente invention permettant de supprimer les effets éventuels de la cavitation par une augmentation de la pression de service du fluide hydraulique;

la fig. 4 est une vue en coupe analogue aux précédentes montrant une troisième variante d'un dispositif selon l'invention comportant deux tubes concentriques entre lesquels est disposé dans le réservoir de fluide hydraulique;

la fig. 5 représente une vue en coupe d'un autre mode de réalisation dans lequel un bloc élastique est interposé entre le réservoir de fluide hydraulique et le cylindre de l'amortisseur;

les fig. 6, 7 et 8 illustrent le fonctionnement de l'amortisseur en fonction de la vitesse de compression;

la fig. 9 est une vue en coupe d'une variante de la réalisation de la fig. 1;

la fig. 10 est une vue en coupe d'une autre variante de l'amortisseur de la fig. 1; et

la fig. 11 est une vue en coupe d'une variante de l'amortisseur de la fig. 5.

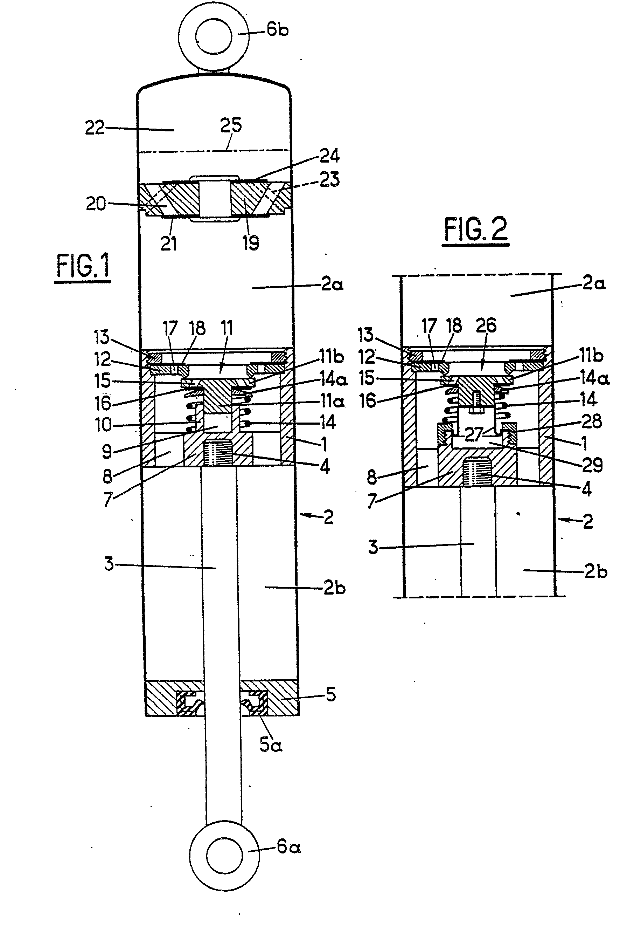

La fig. 1 illustre un mode de réalisation d'un dispositif amortisseur selon la présente invention utilisable notamment pour une suspension de véhicule automobile. L'amortisseur comprend un piston 1 qui coulisse à l'intérieur d'un cylindre 2 et définit dans celui-ci une première chambre 2a côté fond du piston 1 et une deuxième chambre 2b qui renferme la tige 3 rendue solidaire du piston 1 par exemple au moyen de son extrémité filetée 4. Le cylindre 2 est solidaire à son extrémité inférieure d'une pièce de fermeture 5 comportant un alésage central muni d'une bague d'étanchéité 5a à travers lequel passe la tige 3 du piston. A son extrémité externe la tige du piston présente un anneau d'accrochage 6a qui peut être relié à la roue du véhicule automobile. A l'extrémité opposée le cylindre 2 est fermé et comporte un anneau d'accrochage 6b qui peut être solidarisé à la caisse du véhicule.

Le piston 1 est réalisé sous la forme d'une pièce creuse présentant une âme centrale 7 munie d'un taraudage recevant l'extrémité filetée 4 de la tige du piston 3 et solidaire des parois latérales du piston 1 par des nervures 8 laissant entre elles un passage libre pour le fluide hydraulique.

L'âme centrale 7 présente par ailleurs un logement jouant le rôle de chambre de référence 9 et se trouve délimité latéralement par une paroi annulaire 10 solidaire de l'âme centrale 7. La chambre de référence 9 est remplie d'un gaz et se trouve limitée à sa partie supérieure de façon mobile par la surface inférieure de la valve de commande 11 qui se présente sous la forme d'un piston auxiliaire 11a pouvant coulisser de manière étanche à l'intérieur du logement 9. A cet effet, la valve de commande 11 présente en effet une partie inférieure 11a qui coulisse à l'intérieur du logement 9 et un plateau supérieur 11b de plus grand diamètre venant par sa face supérieure en contact d'étanchéité avec un siège solidaire d'une rondelle 12 fixée aux parois latérales du piston 1 par une bague de serrage 13.

La valve de commande 11 est sollicitée en direction de sa fermeture contre le siège de la rondelle 12 par l'action d'un ressort 14 qui prend appui sur un rebord de l'âme centrale 7 du piston 1 d'une part et sur une coupelle annulaire 14a entourant la partie inférieure 11a de la valve de commande 11.

Le plateau 11b de la valve de commande 11 présente des perforations 15 inclinées par rapport à l'axe du dispositif et coopérant avec un clapet anti-retour 16 maintenu contre la surface intérieure du plateau 11b par la coupelle 14a et le ressort 14 de façon à autoriser un passage limité de fluide hydraulique entre la première chambre 2a et la deuxième chambre 2b. La rondelle 12 comporte également des perçages 17 coopérant avec un clapet anti-retour 18 maintenu par serrage entre la rondelle 12 et la bague de serrage 13 de façon à autoriser un passage limité de fluide hydraulique depuis la deuxième chambre 2b vers la première chambre 2a.

Au voisinage de sa partie supérieure, le cylindre 2 comporte une pièce de fermeture supérieure 19 présentant des perçages 20 coopérant avec un clapet anti-retour 21 de façon à autoriser un passage limité du fluide hydraulique depuis le réservoir de fluide hydraulique 22 situé au-dessus de la pièce de fermeture vers la première chambre 2a. La pièce de fermeture 19 comporte également des perçages 23 coopérant avec un clapet anti-retour 24 de façon à autoriser un passage limité du fluide dans le sens inverse c'est-à-dire de la première chambre 2a vers le réservoir 22. On notera que le réservoir 22 est rempli partiellement de fluide hydraulique le niveau du fluide étant représenté en 25, le réservoir contenant également un gaz tel que de l'azote ou de l'air.

Lors du fonctionnement du dispositif amortisseur de l'invention, l'ensemble du cylindre 2 délimité par les pièces de fermeture 5 et 19 est rempli de fluide hydraulique tandis que la chambre de référence 9 est remplie d'un gaz à une pression de référence sensiblement constante. La pression du fluide hydraulique se trouvant dans la première chambre étant $p_1$ et la pression du fluide hydraulique dans la deuxième chambre étant $p_2$ on peut déterminer les forces qui s'exercent sur la valve de commande 11 en tenant compte de la pression sensiblement constante $p_4$ du gaz contenu dans la chambre de référence 9 ainsi que de la surface S ou surface supérieure du plateau 11b et de la surface $s$ du piston supplémentaire 11a qui constitue l'une des parois mobiles de la chambre de référence 9.

La valve 11 se trouve en effet soumise à l'action de quatre forces différentes:

— La force du ressort 14 qui tend à fermer la valve 11;

— la pression $p_1$ régnant dans la première chambre 2a qui agit sur la surface S du plateau 11b de la valve de commande 11 dans un sens qui tend à ouvrir ladite valve de commande;

— la pression $p_4$ sensiblement constante qui agit sur la surface $s$ du piston auxiliaire 11a et qui tend à fermer la valve de commande 11;

— et enfin, la pression $p_2$ qui agit sur la surface restante inférieure du plateau 11b soit (S—s) et qui tend à fermer la valve de commande 11. Si l'on considère pour simplifier les explications que la pression $p_3$ du fluide hydraulique dans le réservoir est égale à la pression atmosphérique extérieure, la pression régnant dans les différentes chambres du dispositif amortisseur de l'invention en fonction de la vitesse de compression de la tige 3 est représentée sur la fig. 6. On voit sur les courbes en trait plein représentées à la fig. 6 que la pression $p_1$ régnant dans la première chambre a tendance à croître en fonction de la vitesse de compression V. Il en est de même de la différence entre les pressions $p_1$ et $p_2$ qui a également tendance à croître en fonction de la vitesse de compression. On notera que la pression $p_1$ doit toujours rester supérieure à la différence $p_1$—$p_2$ pour éviter que la pression $p_2$ régnant dans la deuxième chambre ne soit inférieure à la pression atmosphérique ce qui entraînerait des phénomènes de cavitation nuisibles au fonctionnement. On obtient ce résultat par un choix convenable de la rigidité du clapet 24 qui permet d'augmenter la pression $p_1$. Les deux courbes en traits pleins représentées sur la fig. 6 fournissent donc la variation de ces différentes pressions dans l'hypothèse où la valve de commande 11 resterait fermée.

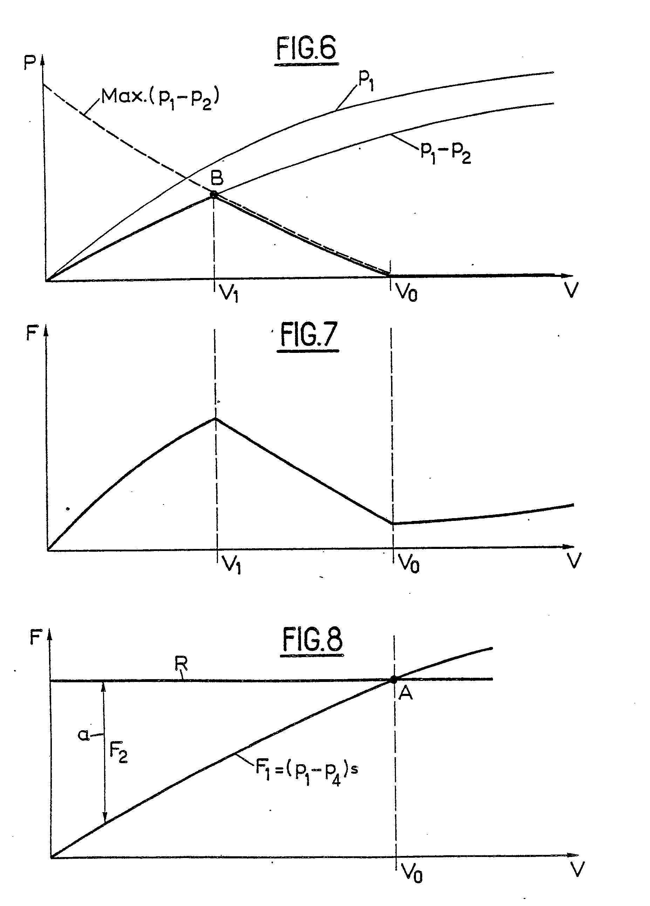

La fig. 8 montre les différentes forces agissant sur la valve 11. On retrouve la force due au ressort 14 qui est sensiblement constante et représentée par la ligne horizontale R. Cette force tend comme on l'a vu à fermer la valve 11. Une force antagoniste est celle qui est due à la pression différentielle s'exerçant sur la portion $s$ de la surface inférieure de la valve 11 soit la courbe $F_1=(p_1—p_4)s$. Etant donné que la pression $p_4$ est constante et que la pression $p_1$ croît en fonction de la vitesse de compression V cette force $F_1$ croît également comme représenté sur la fig. 8.

La courbe représentative de la force $F_1$ coupe la droite représentative de la force du ressort R au point A. A partir de ce point la valve 11 est obligatoirement ouverte et les pressions sont égales dans les deux chambres soit $p_1=p_2$. Cette situation se présente pour une vitesse de compression égale à $V_0$.

Pour des vitesses de compression inférieures à $V_0$ la valve 11 reste en position fermée tant que les autres forces tendant à ouvrir ladite valve restent inférieures à la différence entre la force du ressort et la force $F_1$ c'est-à-dire tant que la pression différentielle entre la première chambre 2a et la deuxième chambre 2b exercée sur la portion de surface (S—s) soit la force $F_2=(p_1—p_2)$ (S—s) reste inférieure à la force qui est représentée par la distance $a$ sur la fig. 8 entre les deux courbes $F_1$ et R.

Pour chaque valeur de la vitesse de compression il est donc possible de déterminer une limite pour la force $F_2$ correspondant à l'ouverture de la valve 11.

On a représenté sur la fig. 6 la valeur maximale de la pression différentielle $p_1—p_2$ qui correspond à cette valeur limite de la force $F_2$. Cette courbe référencée Max $(p_1—p_2)$ est représentée en tirets sur la fig. 6. On voit qu'elle décroît depuis une valeur qui correspond à la vitesse de compression nulle où elle est susceptible d'équilibrer exactement la force du ressort R jusqu'à une valeur nulle correspondant à la vitesse de compression $V_0$.

Il résulte de l'examen de la fig. 6 que la structure du dispositif amortisseur de l'invention est telle que la différence de pression entre la première et la deuxième chambre $p_1—p_2$ ne peut croître que jusqu'à une valeur maximale correspondant au point B de la fig. 6 qui est l'intersection entre la courbe représentant cette pression différentielle en l'absence de la valve 11 et la courbe représentant la valeur maximale de cette pression différentielle Max $(p_1—p_2)$ imposée par l'existence de ladite valve et correspondant à son ouverture. A partir de ce point correspondant à une vitesse de compression $V_1$, ladite pression différentielle suit donc la courbe Max $(p_1—p_2)$ pour rester nulle à partir de la vitesse de compression $V_0$.

La fig. 7 représente les variations résultantes de la force d'amortissement F en fonction de la vitesse de compression. Tant que la pression différentielle $p_1—p_2$ croît jusqu'au point B de la fig. 6 la force d'amortissement F croît également comme dans un amortisseur de type classique. A partir de la limite de vitesse de compression $V_1$, la force d'amortissement décroît au contraire suivant pratiquement la décroissance de la courbe des pressions différentielles maximales Max $(p_1—p_2)$ et ceci jusqu'à la vitesse de compression $V_0$. La force d'amortissement reste ensuite faible et croît légèrement puisqu'elle est alors proportionnelle à la pression différentielle $(p_1—p_4)$ entre la première chambre et la chambre de référence 9 s'exerçant sur l'aire de la section de la tige.

Tant que la vitesse de compression de la tige reste faible et en particulier inférieure à $V_1$ le fluide hydraulique se trouvant dans la première chambre 2a passe dans la deuxième chambre 2b en traversant les passages 15 et la restriction définie par le clapet anti-retour 16. Le volume supplémentaire correspondant à l'immersion de la tige 3 dans le cylindre 2 s'échappe par les canalisations 23 et par l'intermédiaire des restrictions définies par le clapet anti-retour 24. Il y a lieu de noter que la rigidité du clapet 24 est un élément important dans la définition des caractéristiques de l'amortisseur de la présente invention. C'est en effet de la rigidité de ce clapet 24 qui dépend la pression de pilotage de la valve de commande 11 c'est-à-dire la pression régnant dans la première chambre 2a. La rigidité du clapet 24 permet en outre d'éviter les phénomènes de cavitation comme on l'a vu plus haut.

Lorsque la vitesse de compression augmente et dépasse la limite $V_1$, la valve 11 s'ouvre laissant le passage au fluide hydraulique depuis la première chambre 2a vers la deuxième chambre 2b entre la surface supérieure du plateau 11b et le siège de la rondelle 12.

Lors d'un mouvement inverse correspondant à la détente, le fluide hydraulique passe de la deuxième chambre 2b dans la première chambre 2a par les canalisations 17 et les restrictions définies par le clapet anti-retour 18. Dans le même temps du fluide hydraulique se trouvant dans le réservoir 22 traverse les passages 20 par l'intermédiaire du clapet anti-retour 21. Il est avantageux de prévoir un clapet anti-retour 21 présentant une relativement grande souplesse de façon à obtenir les meilleures caractéristiques en fonctionnement de détente.

La fig. 2 montre une variante possible de réalisation de la valve de commande. Dans ce mode de réalisation où les pièces identiques portent les mêmes références, la partie inférieure de la valve de commande référencée 26 est solidaire d'une membrane souple 27 qui est emprisonnée entre la partie supérieure de l'âme 7 du piston 1 et une rondelle filetée 28. De cette manière la chambre de référence 29 comporte comme précédemment une paroi mobile qui se trouve maintenant définie par la membrane 27 solidaire de la valve 26. Le fonctionnement du dispositif est identique au précédent.

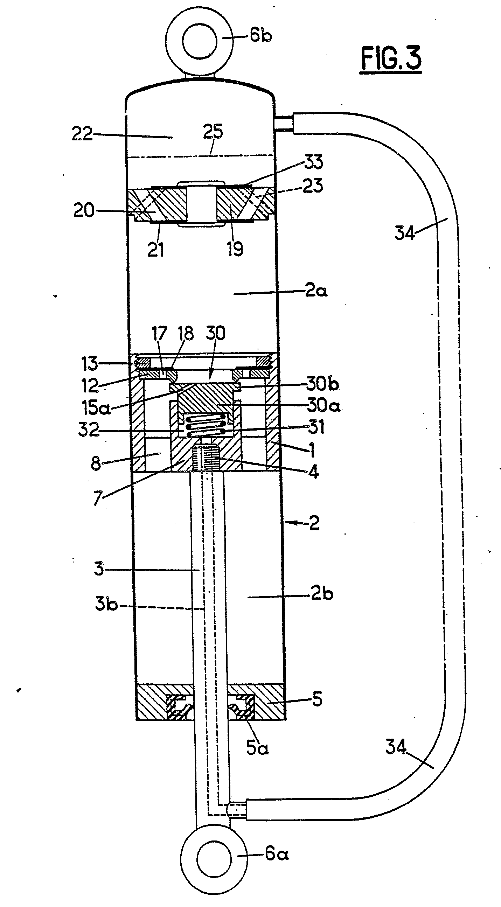

La fig. 3 illustre un mode de réalisation un peu différent dans lequel la structure a été modifiée pour permettre d'éliminer de façon simple les phénomènes nuisibles dus à la cavitation. Dans ce mode de réalisation les pièces identiques portent les mêmes références que sur les figures précédentes.

On sait que pour éviter la cavitation dans un amortisseur il convient d'augmenter la pression du fluide hydraulique. C'est ce qui est réalisé dans la variante représentée sur la fig. 3 pour l'ensemble de l'amortisseur. Comme on peut le voir sur cette figure, la valve de commande 30, munie d'une restriction 15a, présente une portion cylindrique inférieure 30a d'un diamètre plus important par rapport à celui du plateau supérieur 30b que dans le mode de réalisation de la fig. 1 ce qui permet de disposer le ressort de rappel 31 à l'intérieur même d'une chambre de référence 32 jouant le même rôle que la chambre de référence 9 représentée sur la fig. 1 mais de dimensions plus importantes. Grâce à cette modification, la surface inférieure de la valve 30 est relativement plus importante que la surface inférieure $s$ de la valve 11 du mode de réalisation de la fig. 1.

Par ailleurs, tout effet nuisible de cavitation étant supprimé par l'augmentation de pression du fluide hydraulique le clapet anti-retour 33 qui coopère avec les passages 23 de la pièce de fermeture supérieure 19 ne joue plus un rôle anti-cavitation comme dans le mode de réalisation de la fig. 1. Il est donc possible de le rendre plus souple, son rôle unique étant de permettre le pilotage de la valve 30. Grâce à cette souplesse accrue du clapet 33 il est possible d'obtenir une force d'amortissement plus faible lorsque la valve de commande 30 est complétement ouverte. Cette force était représentée sur la fig. 7 pour une vitesse de compression supérieure à la vitesse limite $V_o$. La pression différentielle $(p_1 - p_4)$ entre la première chambre et la chambre de référence étant inférieure dans le mode de réalisation de la fig. 3 on obtient effectivement une force d'amortissement plus faible. Pour obtenir cependant une force suffisante sur la partie inférieure 30a de la valve de commande 30 on est conduit à augmenter relativement la surface inférieure $s$ comme il vient d'être précisé.

Dans le mode de réalisation de la fig. 3 on a représenté également une variante qui pourrait s'appliquer au cas de la fig. 1 consistant à mettre en communication la chambre de référence 32 et la partie supérieure du réservoir de fluide 22. Cette communication est obtenue par une canalisation souple 34 et au moyen d'un perçage axial 3b pratiqué sur toute la longueur de la tige 3 et débouchant dans la chambre de référence 32. De cette manière, les éventuellement fluctuations de pression dues aux variations de température ne peuvent plus influencer le fonctionnement du dispositif amortisseur de la présente invention. Dans cette variante, la chambre de référence 32 peut contenir une partie du fluide se trouvant dans le réservoir 22 dans la mesure où aucune restriction ne freine le libre passage de ce fluide en direction du réservoir. Dans ce cas, la canalisation 34 peut déboucher dans la partie basse du réservoir 22.

Dans une variante, il serait possible de mettre à l'atmosphère la chambre de référence 32 et/ou le réservoir 22.

On notera qu'il est préférable de fixer l'amortisseur de l'invention par les anneaux 6a et 6b sans l'intermédiaire de blocs élastiques mais au contraire au moyen de rotules rigides. Compte tenu en effet de la forme particulière de la courbe de variation de la force d'amortissement en fonction de la vitesse de compression, une fixation par l'intermédiaire de blocs élastiques risquerait d'entraîner des phénomènes de rebond et l'apparition de bruits indésirables.

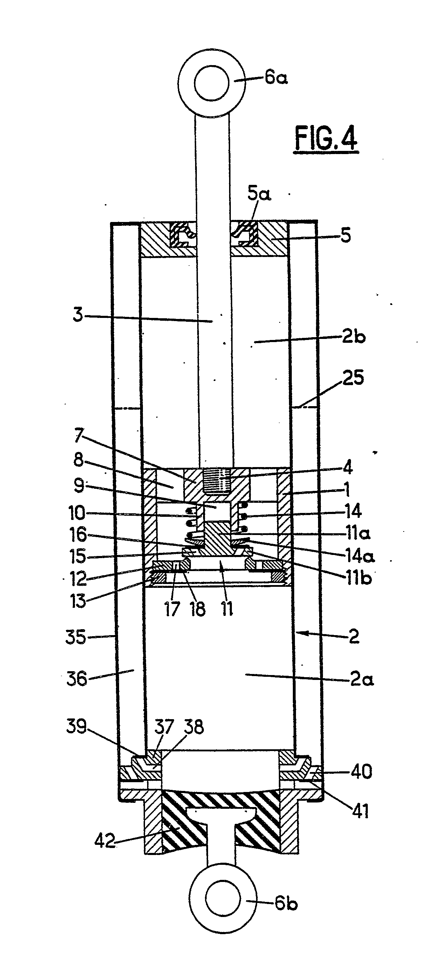

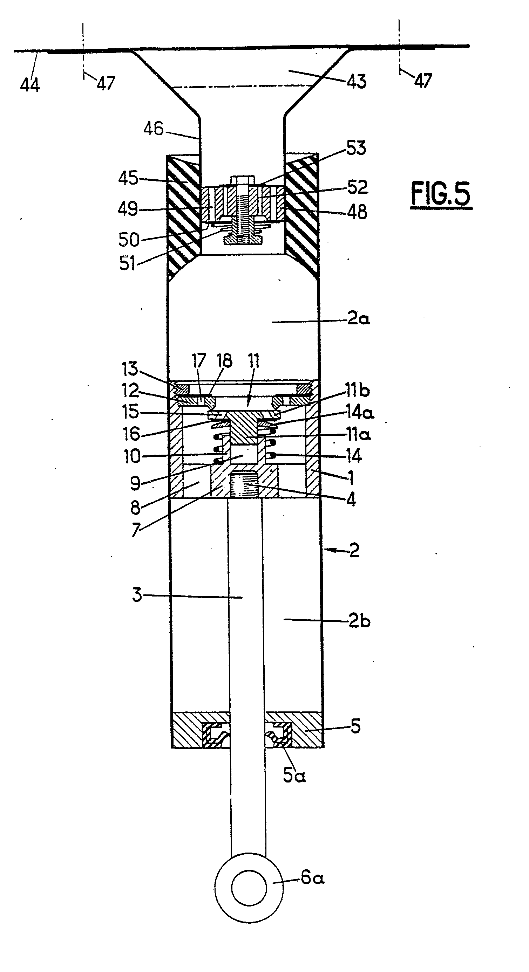

Le dispositif d'amortissement tel qu'il est représenté sur les fig. 1 à 3 permet d'obtenir des variations brusques de la force d'amortissement. Dans certaines applications il peut être nécessaire d'obtenir au contraire un établissement progressif de la force d'amortissement maximale et une diminution également progressive au-delà de la vitesse de compression limite. Les modes de réalisation décrits sur les fig. 4 et 5 permettent d'obtenir ce résultat.

Sur la fig. 4 les pièces identiques portent toujours les mêmes rérérences. Dans ce mode de réalisation on voit que l'amortisseur est disposé avec la tige vers le haut. A titre de variante également applicable aux modes de réalisation précédents, l'amortisseur représenté comporte une enveloppe extérieure cylindrique 35 concentrique au cylindre 2 et définissant avec celui-ci une chambre annulaire jouant le rôle de réservoir de fluide hydraulique 36. A la partie inférieure de l'amortisseur se trouve disposée une pièce de fermeture inférieure 37 qui joue le rôle de la pièce de fermeture supérieure 19 des modes de réalisation précédents. Dans ce but, la pièce de fermeture 37 comporte également des passages 38 et un clapet anti-retour 39 permettant le passage du fluide hydraulique depuis la première chambre 2a vers le réservoir 36. La pièce 37 présente également des passages 40 et un clapet anti-retour 41 autorisant un passage limité du fluide hydraulique en sens inverse.

La fixation de l'amortisseur se fait par l'intermédiaire d'un bloc en matériau élastique 42 par exemple en élastomère qui est monté à la partie inférieure de l'amortisseur et définit une paroi inférieure étanche et déformable pour la première chambre 2a. La fixation pourrait également se faire par example par l'intermédiaire d'une bague solidaire de la pièce 37.

Lors d'une compression brusque de l'amortisseur, le bloc élastique élastomère 42 pénètre en partie à l'intérieur de la première chambre 2a avant tout déplacement de compression de la tige en diminuant le volume utile de ladite chambre ce qui entraîne une augmentation de la pression $p_1$ régnant dans ladite chambre et donc une action sur la valve de commande 11. L'existence du bloc élastique 42 empêche donc l'establissement rapide de la force d'amortissement car un accroissement rapide de cette force entraîne une déformation dudit bloc élastique 42 provoquant l'ouverture de la valve de commande 11.

On notera que l'action du bloc élastique 42 ne doit pas être comparée à celle d'une liaison élastique externe à l'amortisseur telle qu'on les rencontre dans de nombreux modes de réalisation connus car la déformation du bloc élastique élastomère 42 provoque ici une action sur la pression de commande dans la première chambre et un pilotage de la valve de commande 11.

La fig. 5 illustre une variante du mode de réalisation de la fig. 4 dans laquelle la tige du piston est disposée vers le bas et le réservoir 43 placé dans la partie haute du cylindre 2 et fixé directement à la caisse 44 du véhicule. Le cylindre 2 est fermé à sa partie supérieure par un bloc élastique en élastomère 45 qui est solidaire de la paroi interne du cylindre 2 et à l'intérieur duquel est fixé un manchon cylindrique 46 qui s'évase vers le haut et présente dans sa partie supérieure une bride de fixation par l'intermédiaire de laquelle il peut être fixé à la caisse 44 du véhicule automobile par l'intermédiaire de vis 47. Un élément de séparation 48 qui remplit la même fonction que la pièce de fermeture supérieure 19 est fixé à l'intérieur du manchon 46. L'élément de séparation 48 comporte des passages sensiblement axiaux 49 pouvant être obturés par une rondelle élastique 50 jouant le rôle de clapet anti-retour et sollicité vers le haut par un ressort 51 de façon à permettre une circulation de fluide hydraulique depuis le réservoir 43 jusqu'à la première chambre 2a. L'élément de séparation 48 comporte par ailleurs des passages sensiblement axiaux 52 coopérant avec un clapet anti-retour rigide 53 pour permettre une circulation de fluide hydraulique dans la direction inverse.

Ce mode de réalisation peut aisément être appliqué à une suspension de véhicule automobile du type Mac Pherson dans laquelle l'amortisseur est placé à l'intérieur et concentriquement au ressort principal de la suspension. De plus, ce type d'amortisseur peut être intégré dans les suspensions hydropneumatiques qui utilisent le gaz contenu dans le réservoir sous pression comme ressort. Dans ce cas, cette force de ressort est transmise par la tige de l'amortisseur dont la section est proportionnée de mainère convenable.

Le fonctionnement du mode de réalisation de la fig. 5 est par ailleurs identique dans son principe à celui du mode de réalisation de la fig. 4. Bien entendu il est possible de prévoir dans les modes de réalisation des fig. 4 et 5 une communication entre la chambre de référence et le réservoir d'une manière analogue à ce qui a été décrit en référence à la fig. 3.

On notera que dans tous les modes de réalisation et en particulier dans ceux où le réservoir est sous pression, le gaz et le fluide hydraulique se trouvant dans le réservoir peuvent être séparés par un piston mobile ou une membrane souple.

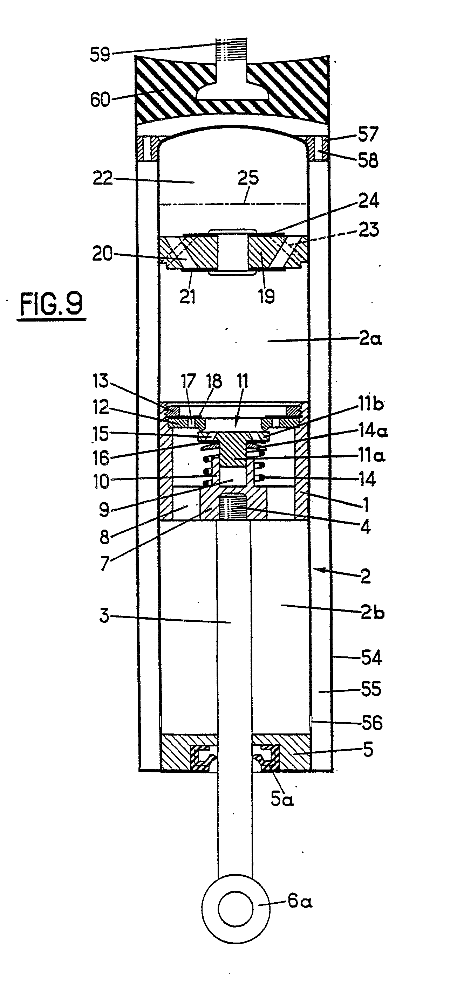

La fig. 9 représente un variante de fixation, à la caisse du véhicule, d'un amortisseur semblable à celui représenté sur la fig. 1. Les pièces identiques portent les mêmes références.

Dans le mode de réalisation de la fig. 9, une enveloppe extérieure 54, concentrique au cylindre 2 définit avec celui-ci une troisième chambre de forme annulaire référencée 55. Cette troisième chambre 55 communique avec la deuxième chambre 2b par des orifices 56. Une pièce de fixation 57 maintient l'enveloppe 54 en position concentrique par rapport au cylindre 2. La pièce 57 est percée d'orifices 58 permettant une libre circulation du fluide hydraulique dans les deux sens autour du cylindre 2. L'extrémité supérieure de l'amortisseur est liée à la caisse du véhicule à l'aide de l'attache filetée 59 noyée dans le bloc élastique 60 lui-même solidaire de la paroi latérale de l'enveloppe 54 à sa partie supérieure au-dessus de l'extrémité supérieure fermée du cylindre 2.

Dans ce mode de réalisation, l'amortisseur fonctionne de la manière suivante: lors d'une compression brusque, le bloc élastique 60 pénètre dans la troisième chambre 55 en provoquant une diminution de débit de fluide passant de la première chambre 2a dans la deuxième chambre 2b. Il en résulte une augmentation du débit de fluide de la première chambre 2a vers le réservoir 22. Compte tenu de la rigidité du clapet 24, cela entraîne un accroissement important de la pression $p_1$ régnant dans la première chambre 2a et seulement une légère augmentation de la pression $p_2$ régnant dans la deuxième chambre 2b. Il en résulte une ouverture de la valve de commande 11.

Le bloc élastique 60 joue ainsi un rôle comparable à celui du bloc élastique 42 du mode de réalisation de la fig. 4 en empêchant l'establissement brusque de la force d'amortissement.

Si l'on modifie l'amortisseur représenté sur la fig. 9 en plaçant une séparation mobile entre le gaz du réservoir 22 et le fluide hydraulique, par exemple une membrane souple ou un piston mobile, il est possible d'effectuer le montage tige en haut l'anneau 6a étant fixé à la caisse et l'attache 59 sur la masse non suspendue.

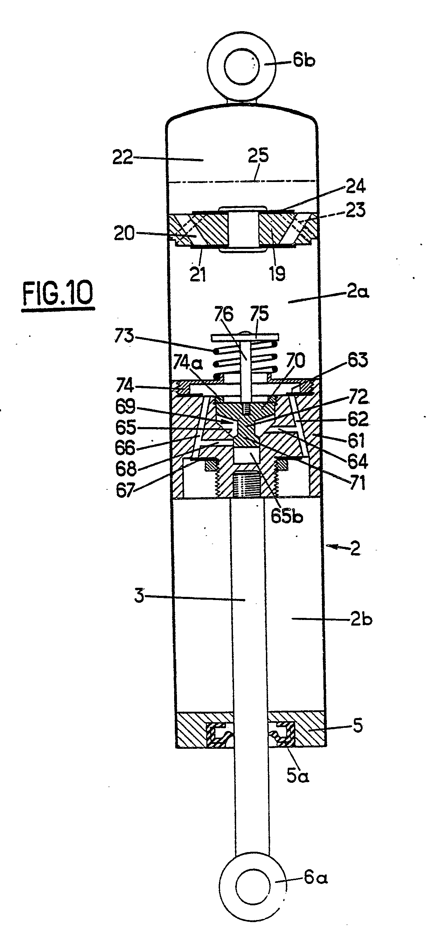

L'amortisseur représenté sur la fig. 10 montre à titre d'exemple appliqué au mode de réalisation représenté sur la fig. 1, une variante de structure pour la valve de commande se présentant ici sous la forme d'un tiroir mobile axialement. Bien entendu, une telle valve à tiroir pourrait être utilisée dans tous les autres modes re réalisation précédemment décrits.

Sur la fig. 10 où les pièces identiques portent les mêmes références, le piston 61 présente des passages tels que 62 reliant la deuxième chambre 2b à la première chambre 2a par l'intermédiaire du clapet anti-retour 63. Un embranchement 64 du passage 62 met en communication la deuxième chambre 2b avec un alésage central 65 du piston 61. Le piston 61 comporte en outre des passages tels que 66 faisant communiquer la première chambre 2a avec la deuxième chambre 2b par l'intermédiaire du clapet anti-retour 67. Un embranchement 68 fait en outre communiquer les passages 66 avec l'alésage 65.

A l'intérieur de l'alésage 65 peut se déplacer en translation axiale un tiroir de valve 69 qui, dans l'exemple illustré sur la fig. 10, comporte une première portée 70 pouvant se déplacer dans une première partie cylindrique de l'alésage 65 et une deuxième portée 71 de diamètre inférieur à la première portée 70 et pouvant se déplacer dans une deuxième portion cylindrique 65b de l'alésage 65.

Les deux portées 70 et 71 sont reliées entre elles par une portion 72 des plus faible diamètre. Le tiroir 69 est soumis à l'action du ressort de rappel 73 qui s'appuie d'une part sur une bague 74 solidaire du piston 61 et d'autre part sur une coupelle 75 solidaire du tiroir 69 par l'intermédiaire de la tige 76. Le ressort 73 exerce une traction sur le tiroir 69 dans un sens tendant à le déplacer vers le haut par rapport à la fig. 10. Le tiroir 69 peut venir en butée sur une bague 74a également solidaire du piston 61 et vissée à l'extrémité de l'alésage 65.

La portion 65b de l'alésage 65 constitue une chambre de référence remplie d'un gaz analogue à la chambre 9 de la fig. 1.

Lors d'une mouvement de compression lente de la tige 3, le fluide hydraulique peut passer de la première chambre 2a à la deuxième chambre 2b par les passages 66 et le clapet anti-retour 67. La valve à tiroir 69 reste fermée c'est-à-dire dans la position représentée sur la fig. 10. Dans cette position en effet il n'y a pas de communication entre les embranchements 68 et 64 des différents passages 66 et 62 la portée 71 obturant l'orifice de l'embranchement 68.

Lors d'un mouvement de compression rapide, la pression augmentant dans la première chambre 2a comme il a déjà été expliqué, provoque, à partir d'une certaine limite, une action de commande sur le tiroir 69 à l'encontre de la force de traction exercée par le ressort 73. Le tiroir 69 se déplaçant vers le bas par rapport à la fig. 10, la portée 71 découvre l'orifice de l'embranchement 68 mettant ce dernier en communication avec l'alésage 65 et l'embranchement 64 de sorte que le fluide hydraulique peut librement passer de la première chambre 2a dans la deuxième chambre 2b par les canalisations successives 66 et 68, l'alésage 65 et les canalisations 64 et 62.

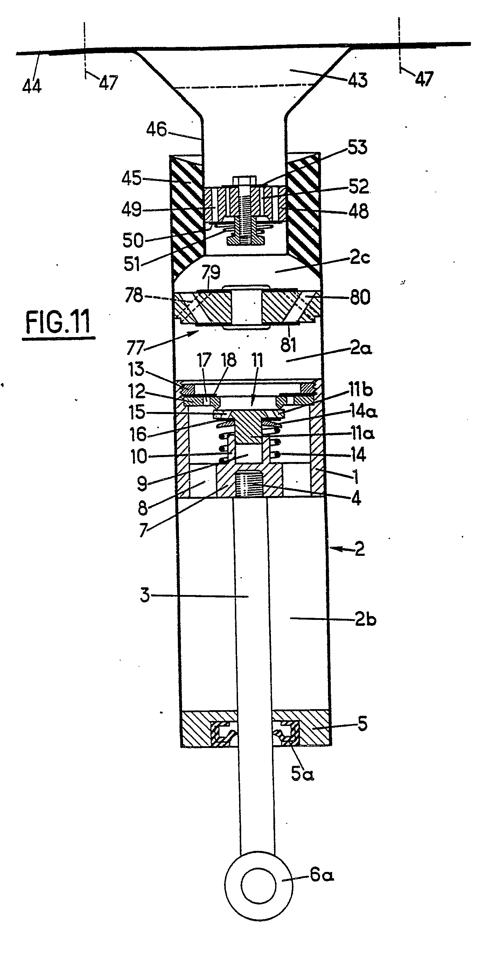

Le mode de réalisation représenté sur la fig. 11 constitue un perfectionnement du mode de réalisation représenté sur la fig. 5. Les pièces identiques de ces deux modes de réalisation portent les mêmes références. Dans certaines applications, il peut se faire que lors d'un mouvement de compression rapide, la pression régnant dans la première chambre 2a du mode de réalisation de la fig. 5 soit très importante. Cette pression qui s'exerce directement sur le bloc élastique 45 risque d'entraîner une réaction sur la caisse du véhicule. Le mode de réalisation de la fig. 11 permet d'éviter cet inconvénient.

Dans ce mode de réalisation on dispose un premier élément de séparation 77 entre la première chambre 2a et une partie d'extrémité 2c de ladite première chambre 2a qui est délimitée par le bloc élastique 45. L'élément de séparation 77 comporte des passages 78 coopérant avec un premier clapet anti-retour 79 pour le passage du fluide hydraulique de la première chambre 2a vers la partie d'extrémité 2c de ladite chambre. Pour les mouvements de détente, l'élément de séparation comporte en outre des passages 80 coopérant avec un clapet anti-retour 81 de la même manière en vue d'une circulation de fluide hydraulique en sens inverse.

L'élément de séparation 48 déjà décrit en référence à la fig. 5 constitue un deuxième élément de séparation muni d'un deuxième clapet 53 et se trouve donc disposé entre la partie d'extrémité 2c et le réservoir 43.

La chute de pression globale entre la première chambre 2a et le réservoir 43 est dans ce mode de réalisation la somme de la chute de pression créée par le clapet anti-retour 79 et celle créée par clapet anti-retour 53. On choisit de préférence la rigidité du premier clapet anti-retour 79 et du deuxième clapet anti-retour 53 de façon à obtenir une chute de pression importante entre la première chambre 2a et la partie d'extrémité 2c de cette chambre et au contraire une chute de pression beaucoup plus faible à travers le deuxième élément de séparation 48 muni de son deuxième clapet anti-retour 53 entre la partie d'extrémité 2c et le réservoir 43. Grâce à cette disposition particulière, le bloc élastique 45 ne se trouve donc plus soumis qu'à la faible pression régnant dans la partie d'extrémité 2c et le fonctionnement de l'amortisseur est moins brutal lors d'un mouvement de compression rapide.

Dans les modes de réalisation qui ont fait l'objet d'une description détaillée, la valve de commande a toujours comporté une surface S soumise à l'action directe de la pression dans la première chambre 2a, d'aire supérieure à celle de la surface s sur laquelle s'exerce la pression du gaz de référence. Cette différence d'aire permet l'obtention de la portion de courbe de la fig. 7 de pente négative et assure une bonne stabilité au système. On pourrait cependant prévoir dans certaines applications une valve dans laquelle les deux surfaces en question seraient d'aire égale, auquel cas la portion correspondante de la courbe de la fig. 7 serait un segment de droite vertical, la force d'amortissement passant brutalement d'une valeur importante à une valeur basse pour la vitesse de compression limite $V_1$. Les problèmes de stabilité rencontrés dans une telle variante peuvent être résolus au moins partiellement, par l'action d'un bloc élastique tel que celui qui est utilisé dans les modes de réalisation des fig. 4 à 5 et 9.

La présente invention trouve son application dans tout dispositif amortisseur que ce soit pour des véhicules ou pour d'autres organes subissant des chocs brutaux. L'amortisseur de l'invention permettant comme on l'a vu de contrôler la vitesse d'établissement de la force, trouve une application intéressante dans les butoirs pour les wagons de chemins de fer, des freins de pièces d'artillerie, des trains d'atterrissage pour avions, etc...

**Revendications**

1. Dispositif d'amortissement du type comprenant un cylindre (2) contenant un fluide hydraulique, un piston (1, 61) actionné par une tige (3) définissant dans le cylindre une première chambre (2a) et une deuxième chambre (2b), ladite deuxième chambre contenant la tige, un réservoir de fluide (22, 36, 43) pouvant communiquer avec la première chambre par l'intermédiaire d'une restriction (23, 38, 52, 78) et une valve de commande (11, 26, 30, 69) disposée dans un passage reliant la première et la deuxième chambre (2a, 2b) et soumise à la fois à l'action d'un ressort (14, 31, 73) et à l'action de la pression sensiblement constante d'un gaz de référence contenu dans une chambre de référence (9, 29, 32, 65b), tendant à la fermer, de façon que la pression différentielle entre la première chambre (2a) et le gaz de référence provoque l'ouverture de la valve de commande lors d'une compression rapide du fluide hydraulique contenu dans la première chambre (2a), caractérisé par le fait que la valve de commande (11, 26, 30, 69) est soumise à l'action du fluide hydraulique contenu dans la deuxième chambre (2b) tendant à la fermer, la valve présentant une première surface d'aire S au contact du fluide hydraulique de la première chambre (2a) et une deuxième surface opposée à la première dont seulement une portion d'aire s inférieure ou égale à l'aire S est soumise à la pression du gaz de référence et constitue une paroi mobile de la chambre de référence (9, 29, 32, 65b).

2. Dispositif selon la revendication 1, caractérisé par le fait que la portion d'aire s de la valve de commande est constituée par la section d'un piston auxiliaire (11a, 30a), qui peut coulisser dans la chambre de référence (9, 32).

3. Dispositif selon les revendications 1 ou 2, caractérisé par le fait que le ressort de rappel (14) de la valve de commande entoure à l'extérieur la chambre de référence (9).

4. Dispositif selon la revendication 1, caractérisé par le fait que le ressort de rappel (31) de la valve de commande est monté à l'intérieur de la chambre de référence (32) et prend appui sur ladite portion d'aire s de la deuxième surface de la valve de commande.

5. Dispositif selon la revendication 1, caractérisé par le fait que la portion d'aire s de la valve de commande est constituée par la section d'un piston auxiliaire relié à la paroi interne de la chambre de référence par une membrane souple (27).

6. Dispositif selon la revendication 2, caractérisé par le fait que le piston auxiliaire définit un tiroir (69) susceptible lorsqu'il est déplacé de découvrir des orifices de passage (68) pratiqués dans le piston (61) de l'amortisseur.

7. Dispositif selon l'une quelconque des revendications précédentes, caractérisé par le fait qu'il comprend des moyens de passage limité (15, 15a, 66) pour le fluide hydraulique entre la première et la deuxième chambres (2a, 2b) lors d'un mouvement de compression lente du piston (1, 61).

8. Dispositif selon l'une quelconque des revendications précédentes, caractérisé par le fait que la pression du gaz de référence est la pression atmosphérique.

9. Dispositif selon l'une quelconque des revendications précédentes, caractérisé per le fait que la chambre de référence (32) est en communication avec le réservoir (22) par l'intermédiaire de la tige creuse (36) du piston (1).

10. Dispositif selon l'une quelconque des revendications précédentes, caractérisé par le fait que le réservoir (22, 43) est disposé dans la partie supérieure d'un tube définissant le cylindre (2) d'amortisseur, partie qui se trouve à l'opposé de la tige (3) du piston (1).

11. Dispositif selon l'une quelconque des revendications 1 à 8, caractérisé par le fait que le réservoir (36) est disposé dans un espace annulaire défini entre le cylindre (2) de l'amortisseur et une enveloppe extérieure concentrique (35).

12. Dispositif selon l'une quelçonque des revendications précédentes, caractérisé par le fait qu'il comprend un bloc élastique (42, 45) délimitant la première chambre (2a) et par l'intermédiaire duquel se fait la fixation de l'amortisseur de façon que la pression régnant dans la première chambre (2a) subisse une augmentation entraînant l'ouverture de la valve de commande (11) lors d'une compression rapide du fluide hydraulique de la première chambre (2a).

13. Dispositif selon la revendication 12, caractérisé par le fait qu'un premier élément de séparation (77) comportant une première restriction (78) réalisant une première chute de pression est disposée entre la première chambre (2a) et une partie d'extrémité (2c) de ladite première chambre contenant le bloc élastique précité (45), un deuxième élément de séparation (48) comportant une deuxième restriction (52) réalisant une deuxième chute de pression étant disposé entre ladite première partie d'extrémité (2c) de la première chambre (2a) et le réservoir (43).

14. Dispositif selon l'une quelconque des revendications 1 à 10, caractérisé par le fait qu'une troisième chambre (55) en communication avec la deuxième chambre (2b) du cylindre est délimitée par un bloc élastique (60) par l'intermédiaire duquel se fait la fixation de l'amortisseur, de manière telle que la pression régnant dans la première chambre (2a) subisse une augmentation entraînant l'ouverture de la valve de commande (11) lors d'une compression rapide du fluide hydraulique de la première chambre (2a).

## Patentansprüche

1. Stoßdämpfervorrichtung des Typs mit einem ein Hydraulikmedium enthaltenden Zylinder (2), einem über eine Stange (3) betätigten Kolben (1, 61), der im Zylinder eine erste Kammer (2a) und eine zweite Kammer (2b) abgrenzt, wobei sich die Stange (3) durch diese zweite Kammer (2b) erstreckt, einem Behälter (22, 36, 43) für das Hydraulikmedium, der über eine Drosselung (23, 38, 52, 78) mit der ersten Kammer (2a) in Verbindung steht, und mit einem Steuerventil (11, 26, 30, 69) in einem Durchgang zwischen der ersten und der zweiten Kammer (2a, 2b), das gleichzeitig unter dem Druck einer Feder (14, 31, 73) und eines in einer Bezugsdruckkammer (9, 29, 32, 65b) enthaltenen Bezugsgases steht, die in Richtung auf das Schließen desselben wirken, und zwar so, daß der Druckunterschied zwischen der ersten Kammer (2a) und dem Bezugsgas das Steuerventil bei einem schnellen Zusammendrücken des Hydraulikmediums in der ersten Kammer (2a) öffnet, dadurch gekennzeichnet, daß das Steuerventil (11, 26, 30, 69) unter der Einwirkung des Hydraulikmediums in der zweiten Kammer (2b) steht, das in Richtung auf das Schließen des Ventils wirkt, wobei das Ventil auf einer ersten Querschnittsfläche S vom Hydraulikmedium der ersten Kammer (2a) beaufschlagt wird während eine zweite der ersten gegenüberliegende Fläche mit einer Teil-Querschnittsfläche s, die kleiner oder gleich der Querschnittsfläche S ist, under dem Druck des Bezugsgases steht und eine bewegliche Wand der Bezugsdruckkammer (9, 29, 32, 65b) bildet.

2. Vorrichtung gemäß Anspruch 1, dadurch gekennzeichnet, daß die Teil-Querschnittsfläche s des Steuerventils durch den Abschnitt eines Hilfskolbens (11a, 30a) gebildet wird, der in der Bezugsdruckkammer (9, 32) gleiten kann.

3. Vorrichtung gemäß den Ansprüchen 1 oder 2, dadurch gekennzeichnet, daß die Rückholfeder (14) des Steuerventils außen um die Bezugsdruckkammer (9) liegend angeordnet ist.

4. Vorrichtung gemäß Anspruch 1, dadurch gekennzeichnet, daß die Rückholfeder (31) des Steuerventils innerhalb der Bezugsdruckkammer (32) montiert ist und auf die genannte Teil-Querschnittsfläche s der zweiten Fläche des Steuerventils drückt.

5. Vorrichtung gemäß Anspruch 1, dadurch gekennzeichnet, daß die Teil-Querschnittsfläche s des Steuerventils durch den Abschnitt eines Hilfskolbens gebildet wird, der mit einer elastischen Membran (27) mit der Innenwand der Bezugsdruckkammer verbunden ist.

6. Vorrichtung gemäß Anspruch 2, dadurch gekennzeichnet, daß der Hilfskolben als Schieber (69) ausgebildet ist, der bei Verschieben Durchgangsöffnungen (68) im Kolben (61) des Stoßdämpfers freigibt.

7. Vorrichtung gemäß einem beliebigen der obigen Ansprüche, dadurch gekennzeichnet, daß sie Mittel mit beschränkter Durchlaßfähigkeit (15, 15a, 16) zwischen der ersten und der zweiten Kammer (2a, 2b) für das Hydraulikmedium bei langsamer Bewegung des Kolbens (1, 61) in Richtung auf das Zusammendrücken des Hydraulikmediums enthält.

8. Vorrichtung gemäß einem beliebigen der vorstehenden Ansprüche, dadurch gekennzeichnet, daß es sich bei dem Bezugsgasdruck um den atmosphärischen Luftdruck handelt.

9. Vorrichtung gemäß einem beliebigen der vorstehenden Ansprüche, dadurch gekennzeichnet, daß die Bezugsdruckkammer (32) über die hohle Stange (36) des Kolbens (1) mit dem Behälter (22) in Verbindung steht.

10. Vorrichtung gemäß einem beliebigen der vorstehenden Ansprüche, dadurch gekennzeichnet, daß der Behälter (22, 43) im oberen Teil eines Rohres angebracht ist, das den Zylinder (2) des Stoßdämpfers bildet, wobei dieser obere Teil der Stange (3) des Kolbens (1) gegenüber liegt.

11. Vorrichtung gemäß einem beliebigen der Ansprüche 1 bis 8, dadurch gekennzeichnet, daß der Behälter (36) aus einem Ringraum besteht, der zwischen das zylinder (2) des Stoßdämpfers und eine konzentrische äußere Umhüllung (35) gebildet wird.

12. Vorrichtung gemäß einem beliebigen der vorstehenden Ansprüche, dadurch gekennzeichnet, daß sie einen elastischen Block (42, 45) enthält, der die erste Kammer (2a) abgrenzt und mittels dessen der Stoßdämpfer befestigt wird, daß beim schnellen Zusammendrücken des Hydraulikmediums in der ersten Kammer (2a) der Druck in der ersten Kammer (2a) ansteigt und das Öffnen des Steuerventils (11) bewirkt.

13. Vorrichtung gemäß Anspruch 12, dadurch gekennzeichnet, daß ein erstes Trennelement (77) mit einer ersten Drosselung (78), die einen ersten Druckabfall bewirkt, zwischen der ersten Kammer (2a) und einem äußeren Teil (2c) dieser ersten Kammer, der den vorgenannten elastischen Block (45) enthält, angeordnet ist, und ein zweites Trennelement (48) mit einer zweiten Drosselung (52), die einen zweiten Druckabfall bewirkt, zwischen dem genannten ersten äußeren Teil (2c) der ersten Kammer (2a) und dem Behälter (43) angeordnet ist.

14. Vorrichtung gemäß einem beliebigen der Ansprüche 1 bis 10, dadurch gekennzeichnet, daß eine dritte Kammer (55) mit der zweiten Kammer (2b) des Zylinders in Verbindung steht und von einem elastischen Block (60) begrenzt wird, mittels dessen der Stoßdämpfer befestigt wird, so daß der Druck in der ersten Kammer (2a) beim schnellen Zusammendrücken des Hydraulikmediums in der ersten Kammer (2a) steigt und das Öffnen des Steuerventils (11) bewirkt.

**Claims**

1. A shock absorber device of the type comprising a cylinder (2) containing a hydraulic fluid, a piston (1, 61) actuated by a rod (3) delimiting a first chamber (2a) and a second chamber (2b) in the cylinder, with the said second chamber containing the rod, a fluid reservoir (22, 36, 43) able to communicate with the first chamber by means of a restriction (23, 38, 52, 78) and a control valve (11, 26, 30, 69) placed in a passage connecting the first and second chambers (2a, 2b) and acted on both by a spring (14, 31, 73) and by the roughly constant pressure of a reference gas contained in a reference chamber (9, 29, 32, 65b), tending to close it, so that the differential pressure between the first chamber (2a) and the reference gas makes the control valve open on rapid compression of the hydraulic fluid contained in the first chamber (2a), characterized in that the control valve (11, 26, 30, 69) is acted on by the hydraulic fluid contained in the second chamber (2b) tending to close it, the valve having a first surface of area S in contact with the hydraulic fluid of the first chamber (2a) and a second surface opposite to the first of which only a small section of area s, less than or equal to area S, is subjected to the pressure of the reference gas and forms a movable wall to the reference chamber (9, 29, 32, 65b).

2. The device according to claim 1, characterized in that the section of area s of the control valve is formed by the cross-section of an auxiliary piston (11a, 30a) which can slide inside the reference chamber (9, 32).

3. The device according to claim 1 or 2, characterized in that the control valve return spring (14) surrounds the outside of the reference chamber (9).

4. The device according to claim 1, characterized in that the control valve return spring (31) is installed inside the reference chamber (32) and bears on the said section of area s of the second surface of the control valve.

5. The device according to claim 1, characterized in that the section of area s of the control valve consists of the cross-section of an auxiliary piston joined to the inside wall of the reference chamber by a flexible diaphragm (27).

6. The device according to claim 2, characterized in that the auxiliary piston delimits a spool (69) which can, when it is moved, uncover ports (68) made in the shock absorber piston (61).

7. The device according to any of the preceding claims, characterized in that it comprises restricted passage means (15, 15a, 66) for the hydraulic fluid between the first and second chambers (2a, 2b) during a slow compression movement of the piston (1, 61).

8. The device according to any of the preceding claims, characterized in that the pressure of the reference gas is atmospheric pressure.

9. The device according to any of the preceding claims, characterized in that the reference chamber (32) is connected to the reservoir (22) by means of the hollow rod (3) of the piston (1).

10. The device according to any of the preceding claims, characterized in that the reservoir (22, 43) is placed in the top of a tube defining the shock absorber cylinder (2), which part is on the opposite side of piston (1) from the rod (3).

11. The device according to any of claims 1 to 8, characterized in that the reservoir (36) is placed in an annular space delimited between the shock absorber cylinder (2) and a concentric outer casing (35).

12. The device according to any of the preceding claims, characterized in that it comprises an elastic block (42, 45) delimiting the first chamber (2a) and by means of which the shock absorber is fixed so that the pressure in the first chamber (2a) is increased leading to the control valve (11) opening during a rapid compression of the hydraulic fluid of the first chamber (2a).

13. The device according to claim 12, characterized in that a first separating element (77) comprising a first restriction (78) operating a first pressure drop is placed between the first chamber (2a) and an end section (2c) of the said first chamber containing the above-mentioned elastic block (45), there being a second separating element (48) comprising a second restriction (52) operating a second pressure drop placed between the said first end section (2c) of the first chamber (2a) and the reservoir (43).

14. The device according to any of claims 1 to 10, characterized in that a third chamber (55) connected to the second chamber (2b) of the cylinder is delimited by an elastic block (60) by means of which the shock absorber is fixed, so that the pressure in the first chamber (2a) is increased during a rapid compression of the hydraulic fluid in the first chamber (2a).

FIG.1

FIG.2

**FIG.3**

FIG.4

**FIG.5**

## FIG.6

$Max.(p_1-p_2)$

$P_1$

$P_1-P_2$

B

$V_1$

$V_0$

V

P

## FIG.7

F

$V_1$

$V_0$

V

## FIG.8

F

R

A

$a$

$F_2$

$F_1=(p_1-p_4)s$

$V_0$

V

FIG.9

FIG.10

FIG.11